Europäisches Patentamt

European Patent Office

Office européen des brevets

(19)

(11) **EP 0 892 387 A1**

(12) **EUROPEAN PATENT APPLICATION**

(43) Date of publication:
**20.01.1999 Bulletin 1999/03**

(51) Int Cl.$^6$: **G10L 5/06**

(21) Application number: **98305390.1**

(22) Date of filing: **07.07.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **18.07.1997 US 896355**

(71) Applicant: **LUCENT TECHNOLOGIES INC.**
**Murray Hill, New Jersey 07974-0636 (US)**

(72) Inventors:
 • **Juang, Biing-Hwang**
  **Warren, New Jersey 07059 (US)**

 • **Li, Qi P.**
  **New Providence, New Jersey 07974 (US)**
 • **Lee, Chin-Hui**
  **New Providence, New Jersey 07974 (US)**
 • **Zhou, Qiru**
  **Scotch Plains, New Jersey 07076 (US)**

(74) Representative:
 **Watts, Christopher Malcolm Kelway, Dr. et al**
 **Lucent Technologies (UK) Ltd,**
 **5 Mornington Road**
 **Woodford Green Essex, IG8 0TU (GB)**

(54) **Method and apparatus for providing speaker authentication by verbal information verification**

(57) A method and apparatus for authenticating a proffered identity of a speaker in which the verbal information content of a speaker's utterance, rather than the vocal characteristics of the speaker, are used to identify or verify the identity of a speaker. Specifically, features of a speech utterance spoken by a speaker are compared with at least one sequence of speaker-independent speech models, where one of these sequences of speech models corresponds to speech reflecting information associated with an individual having said proffered identity. Then, a confidence level that the speech utterance in fact reflects the information associated with the individual having said proffered identity is determined based on said comparison. In accordance with one illustrative embodiment, the proffered identity is an identity claimed by the speaker, and the claimed identity is verified based upon the determined confidence level. In accordance with another illustrative embodiment, each of a plurality of proffered identities is checked in turn to identify the speaker as being a particular one of a corresponding plurality of individuals. The features of the speech utterance may comprise cepstral (*i.e.*, frequency) domain data, and the speaker-independent speech models may comprise Hidden Markov Models of individual phonemes. Since speaker-independent models are employed, the need for each system user to perform an individual training session is eliminated.

FIG. 2

IDENTITY CLAIM → DATABASE 22

"MURRAY HILL" FROM PROFILE

PASS-UTTERENCE "MURRAY HILL" → AUTOMATIC SPEECH RECOGNIZER 21 → RECOGNIZED PHRASE "MURRAY HILL" → TEXT COMPARATOR 23 → DECISION

**Description**

**Field of the Invention**

The subject matter of the present invention relates generally to the field of speaker authentication and in particular to a method of authenticating the identity of a speaker based upon the verbal information content contained in an utterance provided by the speaker.

**Background of the Invention**

Speaker authentication is the process of either identifying or verifying the identity of a speaker based upon an analysis of a sample of his or her speech using previously saved information. By definition, speaker verification (SV) is the process of verifying whether the identity of an unknown speaker is, in fact, the same as an identity being claimed therefor (usually by the speaker himself or herself), whereas speaker identification (SID), on the other hand, is the process of identifying an unknown speaker as a particular member of a known population of speakers.

The applications of speaker authentication include, for example, access control for telephones, computer networks, databases, bank accounts, credit-card funds, automatic teller machines, building or office entry, *etc.* Automatic authentication of a person's identity based upon his or her voice is quite convenient for users, and, moreover, it typically can be implemented in a less costly manner than many other biometric methods, such as, for example, fingerprint analysis. For these reasons, speaker authentication has recently become of particular importance in, for example, mobile and wireless applications.

Conventionally, speaker authentication has been performed based upon previously saved information which, at least in part, represents particular vocal characteristics of the speaker whose identity is to be verified. Specifically, the speech signal which results from a speaker's utterance is analyzed to extract certain acoustic "features" of the speech signal, and then, these features are compared with corresponding features which have been extracted from previously uttered speech (preferably consisting of the same word or phrase) spoken by the same individual. The speaker is then identified, or his or her claimed identity is verified, based on the results of such comparisons. In particular, previously uttered speech samples are used to produce speech "models" which may, for example, comprise stochastic models such as Hidden Markov Models (HMMs), well known to those skilled in the art. Note specifically, however, that the models employed in all such prior art speaker authentication systems are necessarily "speaker-dependent" models, since each model is based solely on the speech of a single individual.

In order to produce speaker-dependent speech models, an enrollment session which includes a speech model "training" process is typically required for each speaker whose identity is to be capable of authentication by the system. This training process requires the speaker (whose identity is known during the enrollment session) to provide multiple (*i.e.,* repeated) training utterances to the system for use in generating sufficiently robust models. Specifically, acoustic features are extracted from these repeated training utterances, and the models are then built based on these features. Finally, the generated models are stored in a database, each model being associated with the (known) identity of the given individual who trained it.

Once the models for all potential speakers have been trained, the system can be used in its normal "test" mode, in which an unknown speaker (*i.e.,* a speaker whose identity is to be either ascertained or verified) provides a test utterance for use in the authentication process. In particular, features extracted from the test utterance are compared with those of the pre-trained, speaker-dependent models, in order to determine whether there is a "match." Specifically, when the system is used to perform speaker verification, the speaker first provides a claim of identity, and only the model or models associated with that identified individual need to be compared to the test utterance. The claimed identity is then either accepted (*i. e.,* verified) or rejected based upon the results of the comparison. When the system is used for speaker identification, on the other hand, models associated with each of a plurality of individuals are compared to the test utterance, and the speaker is then identified as being a particular one of those individuals (or is rejected as being unidentified) based upon the results of these multiple comparisons.

It would be advantageous if a technique for performing speaker authentication were available which did not require the substantial investment in time and effort which is required to effectuate the training process for each of a potentially large number of individuals.

**Summary of the Invention**

We have recognized that, contrary to the teachings of prior art speaker authentication systems, speaker authentication may be performed without the need for performing time-consuming speaker-specific enrollment (*i.e,* "training") sessions prior to the speaker authentication process. In particular, and in accordance with the principles of the instant inventive technique -- which shall be referred to herein as "verbal information verification" (VIV) -- the verbal information content of a speaker's utterance, rather than the vocal characteristics of the speaker, is used to identify or verify the identity of a speaker. Thus, "speaker-independent" models are employed, thereby eliminating the need for each potential system user to perform a complex individual training *(i.e.,* enrollment) session.

In particular, and in accordance with the present invention, a method and apparatus for authenticating a proffered identity of a speaker is provided. Specifically, features of a speech utterance spoken by a speaker are compared with at least one sequence of speaker-independent speech models, where one of these sequences of speech models corresponds to speech reflecting information associated with an individual having said proffered identity. Then, a confidence level that the speech utterance in fact reflects the information associated with the individual having said proffered identity is determined based on said comparison.

In accordance with one illustrative embodiment of the present invention, the proffered identity is an identity claimed by the speaker, and the claimed identity is verified based upon the determined confidence level. In accordance with another illustrative embodiment, each of a plurality of proffered identities is checked in turn to identify the speaker as being a particular one of a corresponding plurality of individuals. The features of the speech utterance may, for example, comprise cepstral *(i.e.,* frequency) domain data, and the speaker-independent speech models may, for example, comprise Hidden Markov Models reflecting individual phonemes *(e.g.,* HMMs of phone and allophone models of individual phonemes).

## Brief Description of the Drawings

Figure 1 shows a prior art system for performing speaker authentication in which speaker-dependent speech models are used to verify a claimed identity.

Figure 2 shows an illustrative system for performing speaker verification using the technique of verbal information verification in accordance with a first illustrative embodiment of the present invention.

Figure 3 shows an illustrative system for performing speaker verification using the technique of verbal information verification in accordance with a second illustrative embodiment of the present invention.

## Detailed Description

In accordance with the principles of the present invention, the technique of verbal information verification (VIV) consists of the verification of spoken information <u>content</u> versus the content of a given data profile. The content may include, for example, such information as a personal pass-phrase or a personal identification number *(i. e.,* a "PIN"), a birth place, a mother's maiden name, a residence address, *etc.* The verbal information contained in a spoken utterance is advantageously "matched" against the data profile content for a particular individual if and only if the utterance is determined to contain identical or nearly identical information to the target content. Preferably, at least some of the information content which must be matched to authenticate the identity of a given individual should be "secret" information which is likely to be known only to the individual himself or herself.

Important applications for the inventive technique of the present invention include remote speaker authentication for bank, telephone card, credit card, benefit, and other account accesses. In these cases, a VIV system in accordance with an illustrative embodiment of the present invention is charged with making a decision to either accept or reject a speaker having a claimed identity based on the personal information spoken by the speaker. In current, non-automated systems, for example, after an account number is provided, an operator may verify a claimed identity of a user by asking a series of one or more questions requiring knowledge of certain personal information, such as, for example, the individual's birth date, address, home telephone number, *etc.* The user needs to answer the questions correctly in order to gain access to his or her account. Similarly, an automated, dialog-based VIV system, implemented in accordance with an illustrative embodiment of the present invention, can advantageously prompt the user by asking one or more questions which may, for example, be generated by a conventional text-to-speech synthesizer, and can then receive and verity the user's spoken response information automatically. (Note that text-to-speech synthesizers are well-known and familiar to those of ordinary skill in the art.) Moreover, in accordance with the principles of the present invention, such an illustrative application can be realized without having to train the speaker-dependent speech models required in prior art speaker authentication approaches.

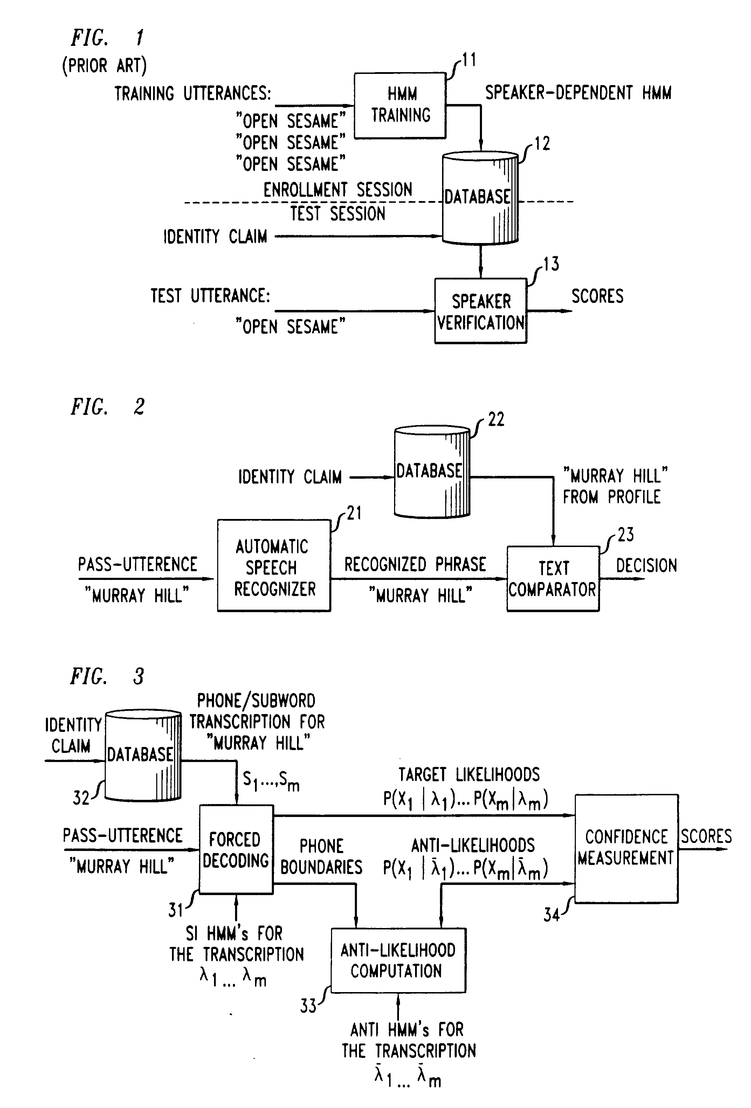

In order to understand the illustrative embodiments of the present invention, a prior art system in accordance with the description provided in the background section above will first be described. In particular, Figure 1 shows a prior art system for performing speaker authentication in which speaker-dependent speech models are used to verify a claimed identity. In the operation of the system of Figure 1, there are two different types of sessions which are performed -- enrollment sessions and test sessions.

In an enrollment session, an identity, such as an account number, is assigned to a speaker, and the speaker is asked by HMM Training module 11 to provide a spoken pass-phrase, *e.g.,* a connected digit string or a phrase. (In the sample enrollment session shown in Figure 1, the pass-phrase "Open Sesame" is used.) The system then prompts the speaker to repeat the pass-phrase several times, and a speaker dependent hidden Markov model (HMM) is constructed by HMM Training module 11 based on the plurality of enrollment utterances. The HMM is typically constructed based on features such as cepstral *(i.e., frequency domain)* data, which features have been extracted from the enrollment *(i.e., training)* utterances. The speaker-dependent HMM is stored in database 12 and associated with the given identity *(e.g., the account number)*. Note that a separate enrollment session must be performed for each (potential) speaker - *i. e.,* for each potential user of the system whose identity is to be capable of verification.

In a test session (which must necessarily be performed subsequent to an enrollment session performed by the same individual), an identity claim is made by the speaker, and in response thereto, speaker verifier 13 prompts the speaker to utter the appropriate pass-phrase. The speaker's test utterance is compared (by speaker verifier 13) against the pre-trained, speaker dependent HMM which has been stored in database 12 and associated with the claimed identity. Speaker verifier 13 then accepts the speaker as having the claimed identity if the matching score (as produced by the comparison of the test utterance against the given HMM) exceeds a predetermined threshold. Otherwise the speaker's claimed identity is rejected.

Note that the pass-phrase may or may not be speaker-dependent. That is, each speaker *(i.e., system user)* may have an individual pass-phrase associated therewith, or, alternatively, all users may be requested to utter the same pass-phrase. In the former case, each speaker may be permitted to select his or her own pass-phrase, which may or may not be secret -- *i. e.,* known only to the speaker himself or herself. Obviously, it is to be expected that the authentication accuracy of the system will be superior if the pass-phrases are, in fact, different. However, in either case, the vocal characteristics of the individual speakers (at least) are being used to distinguish one speaker from another.

As described above and as can be seen in the drawing, the prior art system of Figure 1 performs speaker verification. However, a similar prior-art approach (i. e., one using speaker-dependent HMMs) may be employed in a similar manner to perform speaker identification instead. In particular, the speaker does not make an explicit identity claim during the test session. Rather, speaker verifier 13 performs a comparison between the speaker's test utterance and the pre-trained, speaker dependent HMMs which have been stored in database 12 for each potential speaker. Obviously, such a speaker identification approach may not be practical for applications where it is necessary that the speaker is to be identified from a large population of speakers.

Figure 2 shows an illustrative system for performing speaker verification using the technique of verbal information verification in accordance with a first illustrative embodiment of the present invention. The illustrative system of Figure 2 performs speaker verification using verbal information verification with use of a conventional automatic speech recognition subsystem. Note that only the operation of the test session is shown for the illustrative system of Figure 2 (and also for the illustrative system of Figure 3). The enrollment session for speaker authentication systems which employ the present inventive technique of verbal information verification illustratively require no more than the association of each individual's identity with a profile comprising his or her set of associated information -- *e.g.,* a personal pass-phrase or a personal identification number *(i.e., a "PIN")*, a birth place, a mother's maiden name, a residence address, *etc.* This profile information and its association with a specific individual may be advantageously stored in a database for convenient retrieval during a test session -- illustratively, database 22 of the system of Figure 2 and database 32 of the system of Figure 3 serves such a purpose.

The test session for the illustrative system of Figure 2 begins with an identity claim made by the speaker. Then, automatic speech recognizer 21 prompts the speaker to utter the appropriate pass-phrase, and the speaker's pass-utterance is processed by automatic speech recognizer 21 in a conventional manner to produce a recognized phrase. Note in particular that automatic speech recognizer 21 performs speaker-independent speech recognition, based on a set of speaker-independent speech models in a wholly conventional manner. (The speaker independent speech models may comprise HMMs or, alternatively, they may comprise templates or artificial neural networks, each familiar to those skilled in the art.) For example, automatic speech recognizer 21 may extract features such as cepstral *(i.e., frequency domain)* data from the test utterance, and may then use the extracted feature data for comparison with stochastic feature data which is represented in the speaker-independent HMMs. (Speaker-independent automatic speech recognition based on cepstral features is well known and familiar to those skilled in the art.) In the sample test sessions shown in Figures 2 and 3, the pass-utterance being supplied (and recognized) is "Murray Hill," the name of a town in New Jersey which may, for example, be the speaker's home town, and may have been uttered in response to a question which specifically asked the speaker to state his or her home town.

Once the uttered phrase has been recognized by automatic speech recognizer 21, the illustrative system of Figure 2 determines whether the recognized phrase is consistent with *(i.e., "matches")* the corresponding information content associated with the individual having the claimed identity. In particular, text comparator 23 retrieves from database 22 the particular portion of the profile of the individual having the claimed identity which relates to the particular utterance being provided *(i.e., to the particular question which has been asked of the speaker)*. In the sample test session shown in Figure 2, the text "Murray Hill" is retrieved from database 22, and the textual representation of the recognized phrase -- "Murray Hill" -- is matched thereto. In this case, a perfect match is found, and therefore, it may be concluded by the illustrative system of Figure 2 that the speaker is, in fact, the individual having the claimed identity.

4

As described above and as can be seen in the drawing, the illustrative system of Figure 2 performs speaker verification. However, it will be obvious to those skilled in the art that the same inventive approach (*i. e.,* one using speaker-independent automatic speech recognition and text comparison) may be employed in a nearly identical manner to perform speaker identification instead. In particular, the speaker does not make an explicit identity claim during the test session. Rather, text comparator 23 performs a comparison between the textual representation of the recognized phrase and the corresponding (based, for example, on the particular question asked of the speaker) textual information which has been stored in database 22 for each potential speaker. Then, the identity of the potential speaker which results in the best match is identified as the actual speaker. Obviously, such a speaker identification approach may be most practical for applications where it is necessary that the speaker is to be identified from a relatively small population of speakers.

For purposes of speaker verification (as opposed to speaker identification) in particular, it can be seen that the approach employed by the illustrative embodiment shown in Figure 2 and described above does not utilize the information in the profile in the most effective manner possible. This is because the speech recognition being performed (for example, by automatic speech recognizer 21) fails to take into account the fact that it is expected that the content of the utterance matches the corresponding information in the profile of the individual having the claimed identity. In other words, it is only of interest whether the given utterance matches certain known information. Speech utterance verification -- the process of matching a speech utterance against a known or expected word or phrase - is well known to be more effective than is "blind" speech recognition - the process of identifying *(i.e.,* recognizing) a spoken word or phrase as any of all possible words or phrases by, for example, comparing the utterance against all possible sequences of words or subwords *(e.g.,* phonemes).

Figure 3 shows an illustrative system for performing speaker verification using the technique of verbal information verification in accordance with a second, preferred, illustrative embodiment of the present invention. In this second illustrative system, information which is stored in an individual's profile is more effectively used than it is in the (first) illustrative system of Figure 2. In particular, the illustrative system of Figure 3 implements the inventive technique of verbal information verification by adapting the technique of utterance verification thereto. (The technique of utterance verification is familiar to those skilled in the art. In the past, it has been employed to improve the performance of automatic speech recognition systems by increasing the confidence level of a recognized word or phrase. In particular, it has been advantageously applied to the problem of keyword spotting and non-keyword rejection. Specifically, after the recognizer has initially identified a word or phrase as having been spoken, an utterance verification subsystem performs a re-evaluation of the utterance directly against the model data for the identified word or phrase, thereby either verifying the accuracy of the recognizer's initial determination or else rejecting it. Of course, the technique of utterance verification has not heretofore been applied in the context of speaker authentication at all.)

Specifically, the illustrative system of Figure 3 uses a subword transcription of the text in an individual's profile *(i. e.,* a known correct answer) to decode the test utterance. This approach to the decoding of an utterance is referred to as "forced decoding," an approach familiar to those skilled in the art. In particular, the forced decoding of the test utterance advantageously provides subword segmentation boundaries for the utterance. Then, based on these boundaries, the utterance is matched against the expected sequence of subword *(e.g.,* phone) models to generate phone likelihood scores. The utterance is also matched against a sequence of anti-models (familiar to those skilled in the art) to generate anti-likelihood scores. (The subword models and anti-models illustratively comprise HMMs. Alternatively, however, they may comprise templates or artificial neural networks, each familiar to those skilled in the art.) Finally, the illustrative system of Figure 3 applies hypothesis test techniques to decide whether to accept or reject the test utterance. (Note that the hypothesis test techniques illustratively employed herein are based upon those used for utterance verification, and are therefore familiar to those skilled in the art.)

Referring specifically to Figure 3 and the operation of the illustrative system shown therein, an identity claim is first provided to the system. Then, forced decoding module 31 operates to decode the test utterance based on the phone/ subword transcription, $S_i$, for the pass-phrase which has been stored in database 32 in the profile of the individual having the claimed identity. In addition, a sequence of speaker-independent phone models, $\lambda_i$, which sequence corresponds to the phone transcription retrieved from database 32 is provided to forced decoding module 31 for use in performing the decoding. (The set of speaker-independent phone models from which the sequence $\lambda_i$ is generated may comprise a fixed set of HMMs, one for each phone of the language.) The forced decoding may, for example, be performed with use of the well known Viterbi algorithm, familiar to those of ordinary skill in the art. As a result of the forced decoding, a corresponding sequence of target likelihoods, $P(X_i|\lambda_i)$, is generated, each likelihood representing the quality of the match of one of the models, $\lambda_i$, against its corresponding portion of the test utterance.

In order to improve the performance of the illustrative system of Figure 3, anti-models, familiar to those skilled in the art, are also used in the hypothesis testing process. Specifically, forced decoding module 31 provides the determined phone boundaries to anti-likelihood computation module 33, which, based on a sequence of anti-models *(i.e.,* anti-HMMs) corresponding to the phone transcription retrieved from database 32 and the phone boundaries provided, generates a corresponding sequence of anti-likelihoods, $P(X_i|\overline{\lambda_i})$, each anti-likelihood representing the quality of the match of one of the anti-models, $\lambda_i$, against its corresponding portion of the test utterance. (As is well known to those skilled in the art, an anti-model corresponding to a given subword model may be trained by using data of a set of subwords which are highly confusable with the given subword.)

As the final step in the operation of the illustrative system of Figure 3, confidence measurement module 34 uses the sequence of target likelihood scores and the sequence of anti-likelihood scores to determine an overall confidence measure that the pass-phrase associated with the individual having the claimed identity is, in fact, the phrase of the test utterance. This overall confidence measure may be computed in any of a number of ways which will be obvious to those skilled in the art, and, similarly, given an overall confidence measure, the claimed identity may be accepted or rejected based thereupon in a number of ways which will also be obvious to those skilled in the art. Nonetheless, the following description offers at least one illustrative method for computing an overall confidence measure and determining whether the claimed identity is to be accepted or rejected.

During the hypothesis test for segmented subwords, confidence scores are calculated. Although several confidence measures have been used in prior art systems which employ utterance verification, in accordance with one illustrative embodiment of the present invention a "normalized confidence measure" is advantageously used for at least two reasons. First, conventional (*i.e.*, non-normalized) confidence measures have a large dynamic range. It is advantageous in the application of the present invention to use a confidence measure which has a stable numerical range, so that thresholds can be more easily determined. Second, it is advantageous in a speaker authentication system that thresholds be adjustable based on design specifications which relate to the particular application thereof.

The illustrative normalized confidence measure described herein is based on two scores. In the first stage, subword scores are evaluated for acceptance or rejection on each subword. Then, in the second stage, an utterance score is computed based on the number of acceptable subwords.

Specifically, following the concept of "inspection by variable" in hypothesis testing familiar to those skilled in the art, we define a confidence measure for a decoded subword $n$ in an observed speech segment $O_n$ as

$$C_n = \frac{\log P(O_n|\lambda_n^t) - \log P(O_n|\lambda_n^a)}{\log P(O_n|\lambda_n^t)} = 1 - \frac{\log P(O_n|\lambda_n^a)}{\log P(O_n|\lambda_n^t)}, \tag{1}$$

where $\lambda_n^t$ and $\lambda_n^a$ are the corresponding target and anti-models for subword unit $n$, respectively, P(.) is the likelihood of the given observation matching the given model, assuming that $\log P(O_n|\lambda_n^t) > 0$. This subword confidence score thus measures the difference between a target score and an anti-model score, divided by the target score. $C_n > 0$ if and only if the target score is larger than the anti-model score. Ideally, $C$ should be close to 1.

Next, we define the "normalized confidence measure" for an utterance containing N subwords as

$$M = \frac{1}{N} \sum_{n=1}^{N} f(C_n), \tag{2}$$

where

$$f(C_n) = \begin{cases} 1, & if \ C_n \geq \theta; \\ 0, & otherwise, \end{cases} \tag{3}$$

and $\theta$ is a subword threshold, which may be a common threshold for all subwords or may be subword-specific. in either case, the normalized confidence measure, M, will be in a fixed range $0 \leq M \leq 1$. Note that a subword is accepted and contributes to the utterance confidence measure if and only if its subword confidence score, $C_n$, is greater than or equal to the subword's threshold, $\theta$. Thus, M is a statistic which measures the percentage of "acceptable" subwords in the utterance. M = 0.8, for example, means that 80 percent of the subwords in an utterance are acceptable. In this manner, an utterance threshold can be advantageously determined based on a given set of specifications for system performance and robustness.

Once an utterance score is determined, a decision can be made to either reject or accept an utterance, as follows:

$$\begin{cases} Acceptance: & M_i \geq T_i \ ; \\ Rejection: & M_i < T_i \ , \end{cases} \qquad (4)$$

where $M_i$ and $T_i$ are the corresponding confidence score and threshold for utterance $i$. For a system which bases its decision whether the claimed identity is to be accepted or rejected on multiple utterances *(i.e, a plurality of pass-phrases)*, either one global threshold, *i.e.,* $T = T_1 = \ldots = T_i$, or multiple thresholds, *i.e.,* $T \neq T_1 \neq \ldots \neq T_i$, may be used. The thresholds may be either context *(i.e., information field)* dependent (CD) or context independent (CI). They may also be either speaker dependent (SD) or speaker independent (SI).

For robust verification, two global thresholds for a multiple-question trial may be advantageously used as follows:

$$T_i = \begin{cases} T_{low}, & when \ T_{low} \leq M_i < T_{high} \ at \ the \ first \ time \\ & and \ T_{low} \ can \ be \ used \ only \ once, \\ T_{high}, & otherwise, \end{cases} \qquad (5)$$

where $T_{low}$ and $T_{high}$ are two thresholds, with $T_{low} < T_{high}$. Equation (5) means that $T_{low}$ can be used only once in one verification trial. Thus, if a speaker has only one fairly low score as a result of all of his or her utterances *(i.e, separate pass-phrases)*, the speaker still has the chance to pass the overall verification trial. This may be particularly useful in noisy environments or for speakers who may not speak consistently.

To further improve the performance of an illustrative speaker authentication system using the technique of verbal information verification in accordance with the present invention, both speaker and context dependent thresholds may be advantageously employed. To reduce the risk of a false rejection, the upper bound of the threshold for utterance $i$ of a given speaker may be selected as

$$t_i = min \ \{M_{i,j}\}, \qquad j = 1, \ldots, J , \qquad (6)$$

where $M_{i,j}$ is the confidence score for utterance $i$ on the $j$th trial, and where $J$ is the total number of trials of the speaker on the same context utterance $i$. Due to changes in voice, channels, and environment, the same speaker may have different scores even for the same context utterance. We therefore define an "utterance tolerance interval, "$\tau$, as

$$T_i = t_i - \tau, \qquad (7)$$

where $t_i$ is defined as in Equation (6), $0 \leq \tau < t_i$, and $T_i$ is a CD utterance threshold for Equation (4). By applying the tolerance interval, a system can still accept a speaker even though his or her utterance score $M_i$ on the same context is lower than before. For example, assume that a given speaker's minimal confidence measure on the answer to the $i'th$ question is $t_i = 0.9$. If an illustrative speaker authentication system using the technique of verbal information verification in accordance with the present invention has been designed with $\tau = 0.06\%$, we have $T_i = 0.9 - 0.06 = 0.84$. This means that the given speaker's claimed identity can still be accepted as long as 84% of the subwords of utterance $i$ are acceptable.

In the system evaluation, $\tau$ can be reported with error rates as a guaranteed performance interval. On the other hand, in the system design, $\tau$ can be used to determine the thresholds based on a given set of system specifications. For example, a bank authentication system may need a smaller value of $\tau$ to ensure lower false acceptance rates at a higher security level, while a voice mail system may prefer the use of a larger value of $\tau$ to reduce false rejection rates for user friendly security access.

In accordance with one illustrative embodiment of a speaker authentication system using verbal information verification in accordance with the present invention, the system may apply SI thresholds in accordance with Equation (5) for new users and switch to SD thresholds when the thresholds in accordance with Equation (6) are determined. Such SD thresholds may, for example, advantageously be stored in credit cards or phone cards for user authentication applications.

As described above and as can be seen in the drawing, the illustrative system of Figure 3 performs speaker verification. However, it will be obvious to those skilled in the art that the same inventive approach *(i.e.,* one using speaker-independent phoneme models, phone/subword transcriptions of profile information, and forced decoding of the test utterance) may be employed in a nearly identical manner to perform speaker identification instead. In particular, the speaker does not make an explicit identity claim during the test session. Rather, forced decoding module 31 performs a forced decoding of the test utterance based on <u>each</u> of the corresponding (based, for example, on the particular question asked of the speaker) transcriptions which have been stored in database 22 for <u>each</u> potential speaker, and confidence measurement module 34 produces scores for each such potential speaker. Then, the identity of the potential speaker which results in the best score is identified as the actual speaker. Obviously, such a speaker identification approach may be most practical for applications where it is necessary that the speaker is to be identified from a relatively small population of speakers.

It should be noted that in order to provide a more robust system, the illustrative systems of Figure 2 and Figure 3 may advantageously require that multiple questions be asked of the speaker, and that, for example, all utterances provided in response thereto match the corresponding information in the profile of the individual having the claimed identity. Otherwise, any other person who knew the answer to the single posed question for a given individual (whose profile is included in the database) could act as an imposter and could successfully fool the system of Figure 2 into believing he or she was the claimed individual. By using multiple questions, the system becomes more robust, since it is less likely that anyone other than the person having the claimed identity would know the answers to all of the questions. Of course, it is also advantageous if the test session is not excessively long. One approach is to ask a small number of randomly selected questions *(e.g.,* three) out of a larger set of possible questions *(e.g.,* six), the answers to all of which are stored in the individual's profile in the database.

Another approach to providing a more robust system is to provide profile information which changes dynamically. For example, an individual's access profile may be updated to contain the date of last access. Then, when the given individual attempts to make a subsequent access, it is expected that only he or she is likely to know the date of last access, and is asked to provide it. Other techniques for adding robustness to the security of a speaker authentication system in accordance with the principles of the present invention will be obvious to those skilled in the art.

For clarity of explanation, the illustrative embodiments of the present invention has been presented as comprising individual functional blocks or modules. The functions these blocks represent may be provided through the use of either shared or dedicated hardware, including, but not limited to, hardware capable of executing software. For example, the functions of the modules presented herein may be provided by a single shared processor or by a plurality of individual processors. Moreover, use of the term "processor" herein should not be construed to refer exclusively to hardware capable of executing software. Illustrative embodiments may comprise digital signal processor (DSP) hardware, such as Lucent Technologies' DSP16 or DSP32C, read-only memory (ROM) for storing software performing the operations discussed below, and random access memory (RAM) for storing DSP results. Very large scale integration (VLSI) hardware embodiments, as well as custom VLSI circuitry in combination with a general purpose DSP circuit, may also be provided. Any and all of these embodiments may be deemed to fall within the meaning of the words "block," "module, " or "processor," as used herein.

## Claims

1. A method of authenticating a proffered identity of a speaker, the method comprising the steps of:

   comparing features of a speech utterance spoken by the speaker with at least one sequence of one or more speaker-independent speech models, one of said sequences of said speech models corresponding to speech reflecting information associated with an individual having said proffered identity;

   determining a confidence level that the speech utterance reflects said information associated with said individual having said proffered identity based on said comparison.

2. The method of claim 1 wherein the proffered identity is an identity which has been claimed to be that of the speaker.

3. The method of claim 2 wherein the claim of identity has been made by the speaker.

4. The method of claim 3 further comprising the step of receiving the claim of identity from the speaker.

5. The method of claim 4 further comprising the step of verifying the claimed identity of the speaker based on the determined confidence level.

**6.** The method of claim 1 wherein the proffered identity is one of a plurality of possible identities, each possible identity having corresponding information associated with a corresponding individual having said possible identity.

**7.** The method of claim 6 further comprising the step of identifying the speaker as having the proffered identity based on the determined confidence level.

**8.** The method of claim 1 wherein the speaker-independent speech models comprise Hidden Markov Models.

**9.** The method of claim 8 wherein the speaker-independent speech models comprise Hidden Markov Models reflecting individual phonemes.

**10.** The method of claim 1 wherein the features of the speech utterance comprise cepstral domain data.

**11.** The method of claim 1 wherein said information associated with said individual having said proffered identity comprises a given sequence of one or more words.

**12.** The method of claim 11 wherein

the comparing step comprises performing speech recognition on said speech utterance, whereby said features of the speech utterance are compared with a plurality of sequences of said speech models and the speech utterance is recognized as comprising a particular sequence of one or more words, and

wherein the determining step comprises comparing said recognized particular sequence of one or more words with at least said given sequence of one or more words.

**13.** The method of claim 12 wherein the determining step comprises performing a textual comparison of said recognized particular sequence of one or more words with said given sequence of one or more words.

**14.** An apparatus for authenticating a proffered identity of a speaker, the apparatus comprising:

a comparator which compares features of a speech utterance spoken by the speaker with at least one sequence of one or more speaker-independent speech models, one of said sequences of said speech models corresponding to speech reflecting information associated with an individual having said proffered identity;

a processor which determines a confidence level that the speech utterance reflects said information associated with said individual having said proffered identity based on said comparison.

**15.** An apparatus for authenticating a proffered identity of a speaker, the apparatus comprising means arranged to carry out each step of a method as claimed in any of claims 1 to 13.

*FIG. 1*
(PRIOR ART)

TRAINING UTTERANCES:

"OPEN SESAME"
"OPEN SESAME"
"OPEN SESAME"

HMM TRAINING — 11

SPEAKER-DEPENDENT HMM

ENROLLMENT SESSION
— — — — — — DATABASE — 12 — — — — —
TEST SESSION

IDENTITY CLAIM

TEST UTTERANCE:

"OPEN SESAME"

SPEAKER VERIFICATION — 13

SCORES

*FIG. 2*

IDENTITY CLAIM → DATABASE — 22

"MURRAY HILL" FROM PROFILE

PASS-UTTERANCE "MURRAY HILL" → AUTOMATIC SPEECH RECOGNIZER — 21

RECOGNIZED PHRASE "MURRAY HILL" → TEXT COMPARATOR — 23 → DECISION

*FIG. 3*

IDENTITY CLAIM → DATABASE — 32

PHONE/SUBWORD TRANSCRIPTION FOR "MURRAY HILL"
$S_1...,S_m$

TARGET LIKELIHOODS
$P(X_1 | \lambda_1)...P(X_m|\lambda_m)$

PASS-UTTERANCE "MURRAY HILL" → FORCED DECODING — 31

SI HMM's FOR THE TRANSCRIPTION
$\lambda_1 ... \lambda_m$

PHONE BOUNDARIES

ANTI-LIKELIHOODS
$P(X_1 | \bar{\lambda}_1)...P(X_m|\bar{\lambda}_m)$

CONFIDENCE MEASUREMENT — 34 → SCORES

ANTI-LIKELIHOOD COMPUTATION — 33

ANTI HMM's FOR THE TRANSCRIPTION
$\bar{\lambda}_1 ... \bar{\lambda}_m$

**European Patent Office**

# EUROPEAN SEARCH REPORT

Application Number

EP 98 30 5390

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 91 18386 A (VCS IND INC D B A VOICE CONTRO) 28 November 1991<br>* page 12, line 6 - page 16, line 13 * | 1-7, 11-15 | G10L5/06 |
| A | MATSUI T ET AL: "CONCATENATED PHONEME MODELS FOR TEXT-VARIABLE SPEAKER RECOGNITION"<br>27 April 1993 , SPEECH PROCESSING, MINNEAPOLIS, APR. 27 - 30, 1993, VOL. VOL. 2, NR. -, PAGE(S) II-391 - 394 , INSTITUTE OF ELECTRICAL AND ELECTRONICS ENGINEERS XP000427808<br>* page II-391, left-hand column, line 19 - page II-392 * | 1-4,6,8, 9,11-15 | |
| A | EP 0 590 874 A (AMERICAN TELEPHONE & TELEGRAPH) 6 April 1994<br><br>* column 4, line 17 - line 46; figure 1 * | 1-4,6, 8-10,14, 15 | |
| A | TETSUO KOSAKA ET AL: "RAPID SPEAKER ADAPTATION USING SPEAKER-MIXTURE ALLOPHONE MODELS APPLIED TO SPEAKER-INDEPENDENT SPEECH RECOGNITION"<br>27 April 1993 , SPEECH PROCESSING, MINNEAPOLIS, APR. 27 - 30, 1993, VOL. VOL. 2, NR. -, PAGE(S) II-570 - 573 , INSTITUTE OF ELECTRICAL AND ELECTRONICS ENGINEERS XP000427853<br>* page II-570, left-hand column, line 21 - right-hand column, line 25 * | 1,6,8,9 | **TECHNICAL FIELDS SEARCHED (Int.Cl.6)**<br><br>G10L |

The present search report has been drawn up for all claims

| Place of search | Date of completion of the search | Examiner |
|---|---|---|
| THE HAGUE | 28 August 1998 | Pulluard, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)